# EUROPEAN PATENT SPECIFICATION

(11) **EP 0 768 963 B1**
(45) Date of publication and mention of the grant of the patent: **02.06.1999**
(21) Application number: 95923612.6
(22) Date of filing: 05.07.1995
(51) Int. Cl.: B60R 22/32

(54) **RESCUE KNIFE, ESPECIALLY FOR SEAT BELTS**
RETTUNGSMESSER, INSBESONDERE FÜR SICHERHEITSGURTE
COUTEAU DE SAUVETAGE, NOTAMMENT POUR CEINTURES DE SECURITE

(30) Priority: 06.07.1994 PL 30418694
(43) Date of publication of application: 23.04.1997
(73) Proprietor: " Bras-Pol" Spolka Z O.O., 61-249 Poznan (PL); Firma Andrzej Kaczmarek, 62-052 Komorniki (PL)
(72) Inventor: MATERNE, Olgierd, PL-61-555 Poznan (PL)
(74) Representative: UEXKÜLL & STOLBERG
(86) International application number: PCT/PL95/00013
(87) International publication number: WO 96/01196

(56) References cited:
- DE-A- 3 224 821
- DE-U- 9 115 692
- DE-U- 9 311 120

## Description

The invention concerns a rescue knife, especially for seat belts, which are often blocked in automotive vehicles during accidents causing escape of injured persons from the vehicles to be impossible.

There are known, from the German patent applications DE 2605477 and DE 3224821 and the European patent EP 070439, rescue knives with an immovable edge fixed in the cutting slot of a holder at a specific angle, the holder being ended with a grip shaped to fit human finger or palm.

Knives of that type, when not in use, are stored in a glove compartment or can be hung on a hook fastened to the motor-car body, by means of an opening in the knife grip.

There is a danger to a man not informed about the equipment of a vehicle and the place where the knife is stored as finding it can be difficult for him during rescue operation.

There is also known, from the generic German specification of utility model DE-U 9115692, a rescue knife with the knife edge mounted in a slanted cutting slot that is situated in a holder having rounded comers. The knife is additionally provided with a fastening device in the form of a carriage mounted slidingy on a seat belt, the carriage being designed for fastening the rescue knife, and with an information carrier with personal data of the car driver.

Use of the knife according to the above solution is rather complicated because of possibility of its locking in the carriage, especially during an accident.

A solution according to the invention eliminates these disadvantages. The essence of the invention is to provide a rescue knife, comprising an edge of a constant cutting angle fixed in a holder with slanted cutting slot and rounded comers, with a quick-releasable fastening unit having a mechanism of adjustment of suspension height on the seat belt, the fastening unit consisting of two parallel guides, permanently-joined with holder, small in width, spaced suitably to width of the seat belt being their slideway, while two set bosses situated symmetrically on a part of length of the guides are suspension mechanism.

It is advantageous if the guides being monolithic holder elements are in the shape of strips bevelled symmetrically at least at one end and situated at a distance above the holder.

In a variety of the invention the quick-releasable fastening unit is a catch coaxial with the holder and connected permanently to it, separably connected to a channel seat belt clamp provided with the suspension height adjustment mechanism being a rotatable wedge with a grip, in which a catch hole is situated.

The solution according to the invention enables quick-releasable suspension of a rescue knife on the seat belt in a well visible and accessible place, with possibility of suspension height adjustment.

The invention will now be further described by way of examples shown on the drawings in which:
Figure 1 is a view of a rescue knife seen from the guide side
Figure 2 is an axial section of the knife
Figure 3 is a perspective view of the knife situated on the seat belt
Figure 4 is a perspective view of the channel clamp together with rotatable wedge also situated on the seat belt
Figure 5 is a cross section of the clamp
Figure 6 is a perspective view of the knife from the catch side

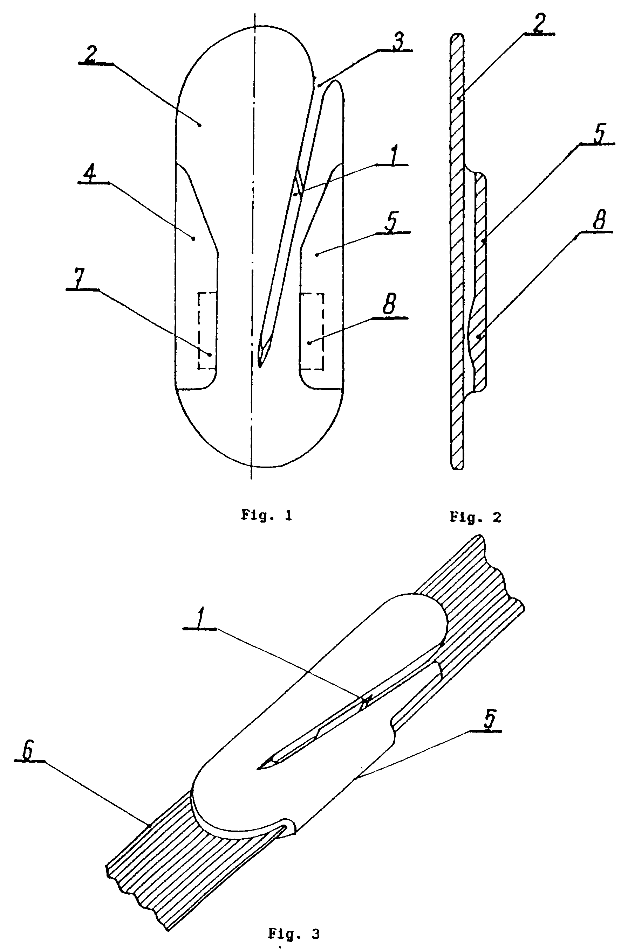

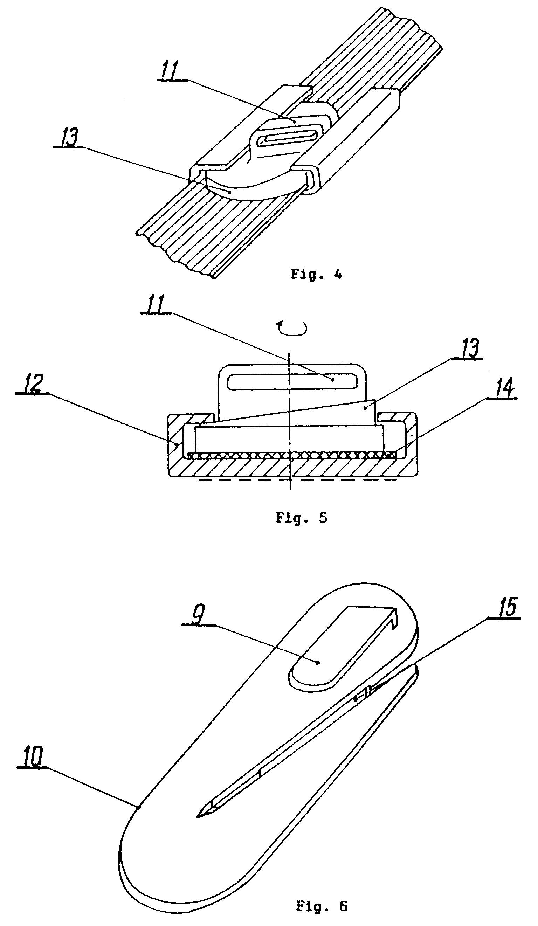

The rescue knife consists of an edge 1 fixed in a holder 2 made of plastic at a constant angle of about 15°. The holder 2 has rounded corners and a slanted cutting slot 3. A pair of guides 4 to 5 spaced to suit width of the seat belt 6 is modelled in the holder 2. Two set bosses 7 and 8 are made in the guides. Resistance affected by the set bosses 7 and 8 during sliding along the seat belt should be such that it does not allow gravity fall of the rescue knife but it makes possible free hand shift of the knife. The rescue knife is placed on the visible, easy-accessible section of the seat belt 6 and the knife can be shifted up or down as needed.

The rescue knife in other embodiment, comprising also an edge 15 mounted in a holder 10 made of plastic, the holder - like the holder in above embodiment - having rounded comers and a slanted cutting slot, is provided with a single catch 9 connected coaxially to the holder 10. The catch serves to hang the rescue knife on the rectangular hole 11, placed in the grip of the rotatable wedge 13, serving to block the channel clamp 12 on the seat belt 14.

When the seat belt blocking mechanism is permanently blocked during an accident, a victim or rescueman releases the rescue knife and cuts through the belt with it.

## Claims

1. A rescue knife, especially for seat belts, having an edge of a constant cutting angle, fixed in a slanted cutting slot of a holder with rounded corners, equipped with a quick-releasable fastening unit provided with a mechanism of adjustment of suspension height on the seat belt, characterized in that said quick-releasable fastening unit consists of two parallel guides (4, 5), permanently joined with the holder (2), small in width and spaced suitably to width of the seat belt (6) being their slideway, while two set bosses (7, 8) situated symmetrically on a part of length of the guides (4, 5) are the suspension height adjustment mechanism.

2. A rescue knife as claimed in Claim 2, characterized in that said guides (4, 5) being monolithic elements of the holder (2) are in the shape of strips bevelled symmetrically at least at one end and situated at a distance above the holder.

3. A rescue knife, especially for seat belts, having an edge of a constant cutting angle, fixed in a slanted cutting slot of a holder with rounded comers, equipped with a quick-releasable fastening unit provided with a mechanism of adjustment of suspension height on the seat belt, characterized in that said quick-releasable fastening unit is a catch (9) coaxial with the holder (10) and connected permanently to it, separably connected to a channel clamp (12) of the seat belt (14), provided with the suspension height adjustment mechanism being a rotatable wedge (13) with a grip, in which a catch hole (11) is situated.

## Patentansprüche

1. Rettungsmesser, insbesondere für Sicherheitsgurte, das eine Schneide mit einem konstanten Schneidwinkel hat, die in einem schräg verlaufenden Schneidschlitz von einer Halterung mit abgerundeten Ecken angebracht ist, und mit einer schnell lösbaren Befestigungseinheit ausgerüstet ist, die mit einem Mechanismus zum Einstellen der Aufhängungshöhe am Sicherheitsgurt versehen ist, dadurch gekennzeichnet, daß die schnell lösbare Befestigungseinheit zwei parallel verlaufende Führungen (4, 5) umfaßt, die dauerhaft mit der Halterung (2) verbunden sind, eine geringe Breite haben und entsprechend der Breite des Sicherheitsgurtes (6), der deren Verschiebebahn bildet, beabstandet sind, wobei zwei Haltevorsprünge (7, 8), die symmetrisch an einem Teil der Länge der Führungen (4, 5) angeordnet sind, den Aufhängungshöhen-Einstellmechanismus bilden.

2. Rettungsmesser nach Anspruch 1, dadurch gekennzeichnet, daß die Führungen (4, 5), die monolithische Elemente der Halterung (2) sind, die Form von Streifen haben, die symmetrisch an zumindest einem Ende abgeschrägt sind und mit einem Abstand über der Halterung angeordnet sind.

3. Rettungsmesser, insbesondere für Sicherheitsgurte, das eine Schneide mit einem konstanten Schneidwinkel hat, die in einem schräg verlaufenden Schneidschlitz von einer Halterung mit abgerundeten Ecken angebracht ist, und mit einer schnell lösbaren Befestigungseinheit ausgerüstet ist, die mit einem Mechanismus zum Einstellen der Aufhängungshöhe am Sicherheitsgurt versehen ist, dadurch gekennzeichnet, daß die schnell lösbare Befestigungseinheit eine Klammer (9) ist, die koaxial zu der Halterung (10) verläuft und dauerhaft mit dieser verbunden ist, wobei ein drehbarer Keil (13) mit einem Griff, in dem eine Klammeröffnung (11) gebildet ist, getrennt mit einer Kanal-Klemmeinrichtung (12) des Sicherheitsgurtes (14) verbunden und mit dem Aufhängungshöhen-Einstellmechanismus versehen ist.

## Revendications

1. Couteau de sauvetage, notamment pour ceintures de sécurité, comportant une arête tranchante d'angle de coupe constant, fixée dans une fente de coupe inclinée d'un support à coins arrondis, muni d'une unité de fixation rapidement libérable, pourvue d'un mécanisme de réglage de la hauteur de suspension sur la ceinture de sécurité, caractérisé en ce que ladite unité de fixation rapidement libérable comprend deux guides parallèles (4, 5) raccordés de façon permanente au support (2), de faible largeur et espacés de façon appropriée afin de s'adapter à la largeur de la ceinture de sécurité (6) qui constitue leur glissière, cependant que deux bossages de réglage (7, 8), situés symétriquement sur une partie de la longueur des guides (4, 5) constituent le mécanisme de réglage de la hauteur de suspension.

2. Couteau de sauvetage selon la revendication 1 caractérisé en ce que lesdits guides (4, 5) qui sont des éléments monolithiques du support (2), présentent la forme de bandes en biseaux symétriquement, au moins à une extrémité et situées à distance au-dessus du support.

3. Couteau de sauvetage, notamment pour ceinture de sécurité comportant une arête tranchante d'angle de coupe constant, fixée dans une fente de coupe inclinée d'un support à coins arrondis, muni d'une unité de fixation rapidement libérable, pourvue d'un mécanisme de réglage de la hauteur de suspension sur la ceinture de sécurité, caractérisé en ce que ladite unité de fixation libérable rapidement est un crochet (9) coaxial au support (10) et connecté de façon permanente à celui-ci, connecté de façon séparable à une griffe en forme de canal (12) de la ceinture de sécurité (14) qui est munie du mécanisme de réglage de la hauteur de suspension constitué d'une clavette rotative (13) avec une poignée, dans laquelle est situé un alésage (11) du crochet.
